Europäisches Patentamt

European Patent Office

Office européen des brevets

(11) Publication number: **0 229 446**
**A2**

(12) **EUROPEAN PATENT APPLICATION**

(21) Application number: **86307081.9**

(22) Date of filing: **15.09.86**

(51) Int. Cl.⁴: **H01C 10/32**

A request for correction of the drawings has been filed pursuant to Rule 88 EPC. A decision on the request will be taken during the proceedings before the Examining Division (Guidelines for Examination in the EPO, A-V, 2.2).

The title of the invention has been amended (Guidelines for Examination in the EPO, A-III, 7.3).

(30) Priority: **17.09.85 GB 8522985**

(43) Date of publication of application:
**22.07.87 Bulletin 87/30**

(84) Designated Contracting States:
**BE DE FR IT SE**

(71) Applicant: **CRYSTALATE ELECTRONICS LIMITED**
**Wharf House Medway Wharf Road**
**Tonbridge Kent TN4 1RE(GB)**

(72) Inventor: **Hester, George Howard**
**13 Wyatts Green Lane Brentwood**
**Essex CM15 OPX(GB)**
Inventor: **Pitcher, Arnold**
**42 Drummond Road Romford**
**Essex(GB)**
Inventor: **Norburn, David William**
**7 Church View Upminster**
**Essex RM14 2QX(GB)**

(74) Representative: **Cole, Paul Gilbert et al**
**HUGHES CLARK & CO. 63 Lincoln's Inn Fields**
**London WC2A 3JU(GB)**

(54) **Rotary type potentiometer.**

(57) A potentiometer is intially assembled such that limited relative translational and rotational movement between an arcuate resistance element (3) and a conductive wiper (9) can be effected in a plane perpendicular to the axis of rotation (A) of the wiper (9) on a carrier (10), until a desired characteristic of output voltage relative to angular rotation of the wiper (9) is achieved when a voltage is applied. The limited rotational movement, available during the manufacturing process, allows achievement of accurate angular positional relationship between an actuating lever (12) and potentiometer mounting means (17, 18) for a particular output voltage. A housing, formed of two relatively moveable parts (1, 2) carrying the wiper (9) in one part (1) and element (3) in the other part (2), allows the necessary relative movement between the wiper (9) and element (3), e.g. along an axis bisecting an angle subtended by the element (3). After setting up, the two parts (1, 2) are secured against further relative movement by application of adhesive or filler material.

FIG.1

# POTENTIOMETER

This invention relates to electrical potentionmeters and particularly to potentiometers of the rotary type. It is particularly, although not exclusively, applicable to potentiometers having an operating spindle arranged for mechanical connection with an external mechanism to follow movement thereof and providing an output voltage which is a function of the position of the external mechanism. Applications of this nature are becoming increasingly important in the automotive industry particularly in engine and drive train management systems, where microprocessors are finding widespread application. Such applications require low cost components but which must operate with a high degree of accuracy and precision. For example, when a voltage is applied to a potentiometer, an output voltage is derived at a wiper which traverses an arcuate resistance element in the potentiometer. This output voltage is dependent upon the position of the wiper on the track and hence of the angle of rotation of a rotatable carrier and spindle associated with the wiper. It is not unusual for the slope of the potentiometer output characteristic, i.e. the output voltage per degree of rotation, to be required to be within $\pm$ 1% of a specified nominal value. In practice using standard low-cost production techniques it is difficult to obtain better than $\pm$ 3% accuracy for this. Furthermore there are applications which require a lever to be fitted to the potentiometer spindle such that an external mechanism contacts the lever to effect rotation of the spindle, which may be spring biassed. An accurate relationship may required between the position of the lever, at a reference voltage output from the potentiometer, and fixing means (e.g. holes) provided on or in the potentiometer housing by which the potentiometer is secured to a support for operation. The specified accuracy of this relationship often cannot be achieved by current low cost production methods.

It is an object of the present invention to overcome or minimise the above problems by providing a potentiometer which can be produced by low-cost techniques but which, after initial assembly, is able to be mechanically adjusted to achieve a required operating accuracy and precision.

The present invention provides an electrical potentiometer comprising: a housing; an elongate arcuate electrical resistance element supported in said housing; first and second electrically conductive terminals connected to opposite ends of said element and adapted to be connected to an electrical voltage source; a wiper of electrically conductive material supported for rotation about an axis in said housing and arranged to traverse said resistance element, said wiper being electrically connected to a third terminal at which an output voltage may be obtained which is a function of position of said wiper on said element; said potentiometer being characterised in that limited adjustment of the position of the supported element relative to said wiper is or has been allowed in a plane perpendicular to the axis of rotation of said wiper, for achieving a desired characteristic of output voltage at the said third terminal relative to angular rotation of said wiper.

The said limited adjustment of the position of the supported element relative to said wiper in the said plane perpendicular to the axis of rotation of the said wiper suitably is capable of being effected or has been effected by means of translational and/or rotational movement of said supported element. The said translational movement suitably is capable of being effected, or has been effected along an axis bisecting an angle subtended by the arcuate element.

The said element may be supported on a substrate which is mounted in said housing and arranged for limited positional adjustment in said housing.

Alternatively, the said housing may comprise first and second parts, said wiper being supported for rotation in said first part and said resistance element being supported on or in said second part, or on a substrate secured to said second part, said first and second parts being maintained in interfacial contact with one another such that limited relative translational and/or rotational movement is or has been allowed therebetween in a plane perpendicular to the axis of rotation of said wiper.

Means are suitably provided such that after any required adjustment of the position of the supported element relative to the wiper has been effected, any further such adjustment is prevented. This said means conveniently comprises an adhesive or suitable hardenable filler material.

The said resistance element is conveniently of film form.

The said wiper is suitably mounted for rotation on a carrier having a spindle journalled in said housing. Lever means may be provided connected to said spindle to enable the potentiometer to be operated by an external mechanism.

Mounting means are suitably provided on the housing by which the potentiometer is able to be secured to a support for operation. This means conveniently comprises holes through the housing, or flanges on the housing, for receiving threading fasteners.

A spring means may be provided, cooperating between the housing and a carrier for the wiper and providing torque therebetween and causing the wiper to attain a position at one end of the resistance element in the absence of any externally applied rotational motion to the wiper.

The potentiometer of the invention has the advantage that after being initially assembled, it can be electrically connected to a voltage source and the output voltage characteristic per degree of angular rotation of the wiper measured. If this characteristic is unsatisfactory, translational movement of the supported arcuate resistance element relative to the wiper is effected in a plane perpendicular to the axis of rotation of the wiper and suitably along an axis bisecting an angle subtended by the arcuate resistance element, until the precisely desired characteristic is obtained. Furthermore, if when a particular output voltage is obtained an external actuating lever connected to the wiper is found not to be in precisely the required angular position relative to the potentiometer mounting means, the supported arcuate resistance element can be rotated slightly about the axis of rotation of the wiper to remedy this. Adhesive or filler material is then applied to fix the position of the supported resistance element.

The invention is now described, by way of example, with reference to the accompanying drawings, in which:-

Figure 1 represents a cross-sectional view of a potentiometer according to the invention;

Figure 2 represents a rear plan view of the potentiometer of Figure 1;

Figure 3 illustrates the effect on electrical angle in the potentiometer of Figures 1 and 2 of translational movement between two parts of the potentiometer housing; and

Figure 4 represents an exploded view showing the two parts of the potentiometer housing.

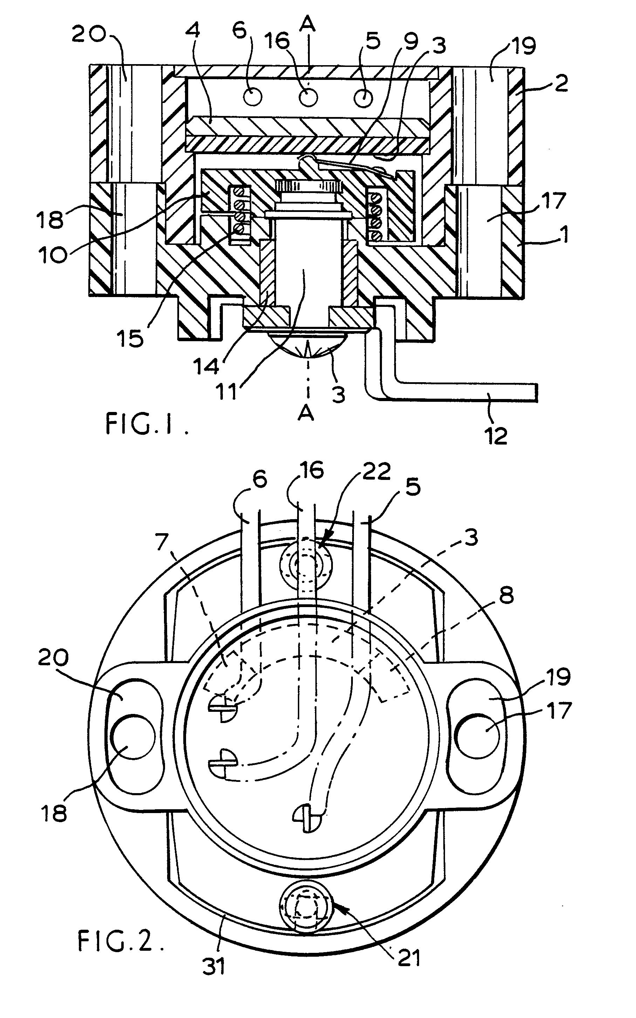

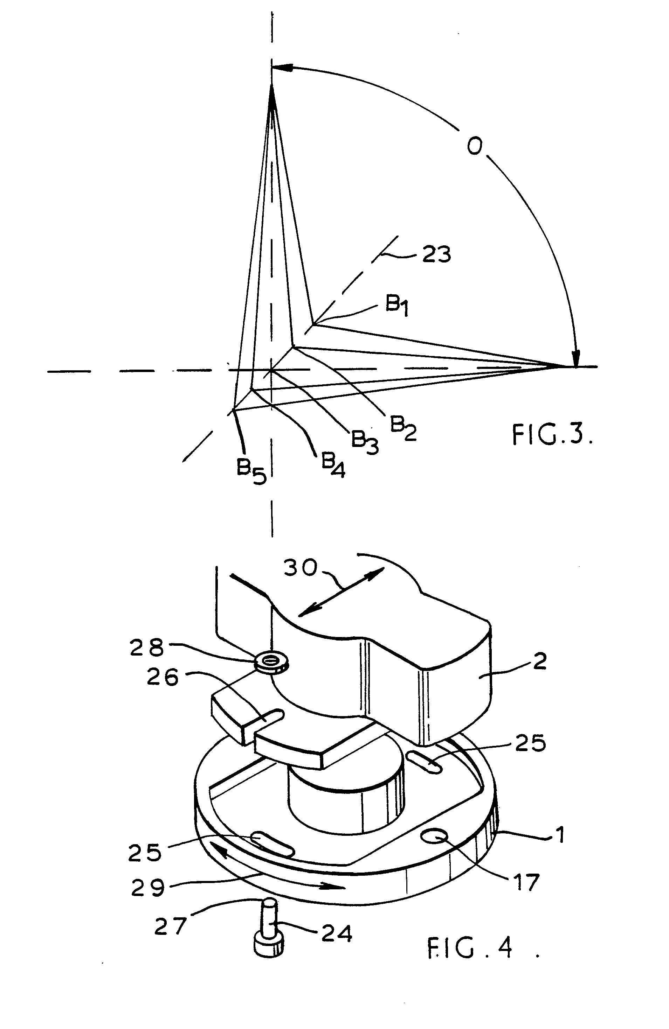

An electrical potentiometer is constructed as follows: A housing is provided comprising first and second parts 1 and 2 each suitably formed of moulded plastics material. An elongate arcuate film electrical resistance element 3, e.g. of conductive polymer material, is provided on an electrically insulating substrate 4 secured inside the second part 2 of the housing. First and second electrically conductive terminals 5 and 6 are secured in the second part 2 of the housing and are respectively electrically connected in well-known manner to conductive films 7 and 8 at opposite ends of the resistance element 3 using, for example, flexible leads (not shown). A wiper 9 of resilient electrically conductive material is secured to an electrically insulating carrier 10 supported on a spindle 11 for rotation about an axis A in the first part 1 of the housing and such that the wiper 9 traverses the arcuate resistance element 3. An operating lever 12 is secured to the spindle 11 by means of a screw 13 and locating flats which are machined at the end of the spindle 11 to prevent rotation between the spindle 11 and lever 12. The spindle 11 is journalled in a bearing 14 in the first part 1 of the housing. A return spring 15 cooperates between the wiper carrier 10 and the first part 1 of the housing and provides torque therebetween and causes the wiper 9 to attain a position at one end of the arcuate resistance element 3 in the absence of any externally applied rotational motion by way of the lever 12. A third electrically conductive terminal 16 secured to the second part 2 of the housing is electrically connected to the wiper 9 by way of electrically conductive collector and wiping contact means which are very well known in the art and have been omitted from the drawings to aid clarity and avoid over-complexity. Holes 17 and 18 are provided through the first part 1 of the housing and elongate holes 19 and 20 are provided through the second part 2 of the housing. These holes permit threaded fasteners to be passed through the housing to secure the potentiometer to a support (not shown) associated with a moveable external mechanism (also not shown) whose motion the lever 12 will follow. During assembly of the potentiometer the first and second parts 1 and 2 of the housing are retained together in interfacial contact by means such as arrangements 21 and 22 in each of which a headed pin 24 (Figure 4) passes through a slotted aperture 25 in one part 1 of the housing, through a slotted aperture 26 in the other part 2 of the housing and is then heat swaged at its end 27, after applying a washer 28, such that the two parts of the housing whilst being retained together are able to undergo a limited amount of relative rotational (see arrows 29) and translational - (see arrows 30) movement in a plane perpendicular to the axis A of the spindle 11, clearance 31 - (Figure 2) between the two parts of the housing allowing this to take place. Relative translational movement between the two parts of the housing is arranged to be capable of taking place along an axis bisecting an angle subtended by the arcuate element 3. The pins and slotted aperture arrangements 21 and 22 may be replaced by other fastening means involving, for example, screws or nuts and bolts, arranged to allow the necessary relative movement between the two parts of the housing.

A voltage source is then connected to the terminals 5 and 6 and output voltage charcteristic per degree of rotation of the wiper carrier 10, resulting from movement of the lever 12, is measured between the third terminal 16 and one of the other terminals. If this characteristic is unsatisfactory, relative translational movement is effected between the two parts 1 and 2 of the housing, as described above, until the desired characteristic is obtained.

The effect of such translational movement is illustrated in Figure 3. If O is the angle subtended by the arcuate resistance element 3, then this angle can be effectively altered, the translational movement causing relative movement between the axis of rotation of the wiper/carrier assembly 9 and 10 and the supported resistance element 3 along an axis 23 bisecting the angle O. $B_1$, $B_2$, $B_3$, $B_4$ and $B_5$ illustrate effective positions of the axis of rotation of the wiper/carrier assembly resulting from the translational movement which is effected between the two parts of the housing.

If when a particular output voltage is obtained from the potentiometer the lever 12 is found not to be in precisely the required angular position relative to the mounting holes 17 and 18, this situation is able to be remedied by effecting a small degree of relative rotation between the parts 1 and 2 of the housing.

When the necessary adjustments have been effected to the potentiometer, the two parts 1 and 2 of the housing are secured together to prevent any further relative movement from occurring. This can be readily achieved by means of an adhesive or by filling spaces between the two parts of the housing with a hardenable or polymerisable material, such as an epoxy resin.

## Claims

1. An electrical potentiometer comprising: a housing (1, 2); an elongate arcuate electrical resistance element (3) supported in said housing (1, 2); first and second electrically conductive terminals - (5, 6) connected to opposite ends of said element - (3) for eventual connection to an electrical voltage source; a wiper (9) of electrically conductive material supported for rotation about an axis (A) in said housing (1, 2) and arranged to traverse said resistance element (3), said wiper (9) being electrically connected to a third terminal (16) at which in use of the potentiometer an output voltage may be obtained which is a function of position of said wiper (9) on said element 3, characterised in that limited adjustment of the position of the supported element (3) relative to said wiper (9) is or has been allowed in a plane perpendicular to the axis (A) of rotation of said wiper (9), for achieving a desired characteristic of output voltage at the said third terminal (16) relative to angular position of said wiper (9).

2. A potentiometer according to Claim 1, in which said limited adjustment of the position of the supported element (3) relative to said wiper (9) in the said plane perpendicular to the axis (A) of rotation of the said wiper is capable of being effected or has been effected by means of translational and/or rotational movement of said supported element (3).

3. A potentiometer according to Claim 2, in which said translational movement is capable of being effected, or has been effected along an axis - (23) bisecting an angle (O) subtended at the axis - (A) by the arcuate element.

4. A potentiometer according to Claim 1, 2 or 3, in which said element is supported on a substrate (4) which is mounted in said housing (1,2) and arranged for limited positional adjustment in said housing (1, 2).

5. A potentiometer according to Claim 1, 2 or 3, in which the said housing comprised first and second parts (1, 2), said wiper (9) being supported for rotation in said first part (1) and said resistance element (3) being supported on or in said second part (2), or on a substrate (4) secured to said second part (2), said first and second parts (1, 2) being maintained in interfacial contact with one another such that limited relative translational and/or rotational movement is or has been allowed therebetween in a plane perpendicular to the axis - (A) of rotation of said wiper (9).

6. A potentiometer according to any preceding claim, in which an adhesive, a suitable hardenable filler material or other means are provided such that after any required adjustment of the position of the supported element (3) relative to the wiper (9) has been effected, any further such adjustment is prevented.

7. A potentiometer according to any preceding claim, in which the said resistance element (3) is of film form, said wiper (9) is mounted for rotation on a carrier (10) having a spindle (11) journalled in said housing (1).

8. A potentiometer according to Calim 7, in which lever means (12) is provided connected to said spindle (11) to enable the potentiometer to be operated by an external mechanism.

9. A potentiometer according to any preceding claim, in which mounting means are provided on the housing (1, 2) by which the potentiometer is able to be secured to a support for operation, said mounting means comprising holes through the housing (1, 2), or flanges on the housing, for receiving threaded fasteners.

10. A potentiometer according to any preceding claim, in which a spring means (15) is provided, cooperating between the housing (1, 2) and a carrier (10) for the wiper (9) and providing torque therebetween and causing the wiper (9) to attain a position at one end of the resistance element (3) in the absence of any externally applied rotational motion to the wiper.

FIG.1.

FIG.2.

FIG.3.

B₁ 23

B₂

B₃

B₄

B₅

O

FIG.4.

28

26

30

2

25

25

29

27

24

17

1

# Hughes Clark

63 Lincoln's Inn Fields
London WC2A 3JU

Telephone 01-404 5414
Telex 27465 NPM G
Telefax 01-831 9369 (G2 + 3)

Patent Agents since 1829

European Patent Office
Receiving Section
P.B. 5818 Patentlaan 2
2280 HV Rijswijk (ZH)
Netherlands

10th October 1986

**Our ref:9564(A)/KBW**

REGISTERED

Dear Sirs,

**Patent Application No. 86307081.9**
**Crystalate Electronics Limited**

Some minor errors have been noted in Figure 1 of the drawings of the above application, as shown in red on the attached copy and we request that the amended formal drawings filed herewith be substituted in the official record.

Yours faithfully,
Hughes Clark & Co

P G Cole
Representative

In figure 1 the reference number 4 should indicate the element that appears below the one indicated on the original drawing. At the bottom of Fig 1, the reference 3 should be corrected to 13.

E T Parker FBIM MRTS; A C Askwith (Solicitor); P G Cole CPA EPA MA (Oxon) CChem MRSC; W D Cooke CPA EPA MA (Cantab) FBIS;
C G Horspool (Solicitor); J D Major CPA EPA BSc (Comb.Hons); R A Sheridan FITMA; J P Simpson; K B Wenman.
Hughes, Clark & Co: Registered Office Ellerd House, Harpenden, Herts AL5 2EJ, England. Registered No 100293